# EUROPEAN PATENT SPECIFICATION

(11) **EP 3 295 537 B1**
(45) Date of publication and mention of the grant of the patent: **15.04.2020**
(21) Application number: 16793593.1
(22) Date of filing: 13.05.2016
(51) Int. Cl.: H02J 7/14, B25F 5/00, H02P 25/14

(54) **ON-BOARD BATTERY CHARGING AND REGENERATIVE BRAKING**
BORDEIGENE BATTERIEAUFLADUNG UND NUTZBREMSUNG
CHARGE DE BATTERIE EMBARQUÉE ET FREINAGE PAR RÉCUPÉRATION

(30) Priority: 13.05.2015 US 201562160674 P
(43) Date of publication of application: 21.03.2018
(60) Divisional application: 19204260.4
(73) Proprietor: Black & Decker Inc., New Britain, CT 06053 (US)
(72) Inventor: SEMEN, Andrew E., Jr., Towson, Maryland 21286 (US); WHITE, Daniel J., Towson, Maryland 21286 (US); FORSTER, Michael K., Towson, Maryland 21286 (US)
(74) Representative: SBD IPAdmin
(86) International application number: PCT/US2016/032314
(87) International publication number: WO 2016/183419

(56) References cited:
- WO-A1-2013/014351
- WO-A1-2015/179318
- DE-A1- 4 107 391
- FR-A1- 2 934 217
- US-A- 4 835 409
- US-A1- 2010 005 614
- US-A1- 2010 007 293
- US-A1- 2010 096 926
- US-A1- 2012 019 174
- US-A1- 2012 104 988
- US-B1- 6 448 732

## Description

This description relates to a device containing an electric motor, such as a power tool, that includes on-board battery charging and regenerative braking for charging a battery.

One method to provide a regulated current to charge a battery is to use a buck converter. This method has been employed in numerous battery pack chargers, such as those use to charge battery packs for power tool products. The buck converter uses a semiconductor switch in series with an inductor to take a voltage source that is higher than the battery voltage and allow a controlled amount of current to flow from the source to the battery. This is accomplished by turning the semiconductor switch on and off at a given frequency, which will produce a rising current during the switch on-cycle and a falling current during the off-cycle. A recirculating diode is placed in a manner to allow the energy stored in the inductor to flow in a current loop between the battery and inductor during the switch off-cycle.

According to one general aspect, an electrical device includes a universal motor having at least one coil, a first input configured to be coupled to a rechargeable direct current (DC) power source, a second input configured to be coupled to an alternating current (AC) power source and a motor control module that is operably connected to the universal motor, to the first input and to the second input. The motor control module is configured to deliver power from at least one of the rechargeable DC power source and the AC power source to the universal motor. The electrical device includes a charge control circuit that is operably connected to the universal motor and to the second input, where the charge control circuit is configured to enable charging the rechargeable DC power source using energy from the AC power source and the at least one coil of the universal motor in a buck converter configuration.

Implementations may include one or more of the following features. For example, the charge control circuit may be configured to enable charging of the rechargeable DC power source when the universal motor is operating using energy from the AC power source. The charge control circuit may be configured to enable charging of the rechargeable DC power source during coasting cycles of the universal motor while the universal motor is operating using energy from the AC power source. The at least one coil may include a motor field coil and an armature coil, and the charge control circuit may be configured to use energy from the motor field coil and the armature coil in the buck converter configuration. The charge control circuit may include a first switch connected in series between a negative terminal of the rechargeable DC power source and a terminal of the at least one coil and a second switch and a diode connected in series between a positive terminal of the rechargeable DC power source and the terminal of the at least one coil and in parallel to the first switch. The charge control circuit may close the first switch and open the second switch so that energy from the AC power source is delivered to the at least one coil while the universal motor is running and open the first switch and close the second switch so that current from the at least one coil is delivered to the rechargeable DC power source for charging while the universal motor is coasting.

In one implementation, charge control circuit may be configured to enable charging of the rechargeable DC power source only when the universal motor is not operating. The at least one coil may include a motor field coil, and the charge control circuit may be configured to use energy from the motor field coil in the buck converter configuration. The charge control circuit may include a first switch connected in series between a negative terminal of the rechargeable DC power source and a first terminal of at least one coil, a second switch connected in series between a positive terminal of the rechargeable DC power source and the first terminal of the at least one coil and in parallel to the first switch, and a recirculating diode connected in series between the negative terminal of the rechargeable DC power source and a second terminal of the at least one coil. During operation of the motor, the first switch is closed and the second switch is opened so that energy from the AC power source is delivered to the at least one coil, and during charging of the rechargeable DC power source, the first switch is opened and the second switch is closed so that current from the at least one coil is delivered to the rechargeable DC power source for charging. The charge control circuit may further include a third switch connected in series between the AC power source and the second terminal of the rechargeable DC power source. The third switch may be configured to enable and disable running the universal motor using the AC power source, and cycling between opened and closed states to enable charging of the rechargeable DC power source using the at least one coil in the buck converter configuration.

In one implementation, the charge control circuit may include a switch and a diode connected between the at least one coil and the at least one rechargeable DC power source. The device may be a power tool. The device may be an appliance. The rechargeable DC power source may include a rechargeable battery. The rechargeable DC power source may include a first rechargeable DC power source and a second rechargeable DC power source.

In an alternative example, not covered by the scope of the present invention, an electrical device includes a brushless motor having at least one coil, a first input configured to be coupled to a rechargeable direct current (DC) power source, a second input configured to be coupled to an alternating current (AC) power source and a switch module that is operably connected to the brushless motor, to the first input and to the second input. The switch module may be configured to receive power from at least one of the AC power source and the rechargeable DC power source so that both the AC power source and the DC power source are able to operate the brushless motor. The device includes a motor control circuit that is operably coupled to the brushless motor and to the switch module, where the motor control circuit is configured to control operation of the brushless motor. The device includes a charge control circuit that is operably connected to the brushless motor and to the first input, where the charge control circuit is configured to enable charging of the rechargeable DC power source using power from the AC power source, the at least one coil of the brushless motor and the motor control circuit.

Implementations may include one or more of the following features. For example, the charge control circuit may be configured to enable the charging of the rechargeable DC power source in a buck converter arrangement. The charge control circuit and the motor control circuit may be configured to charge the rechargeable DC power source when the brushless motor is not operating. The charge control circuit and the motor control circuit may be configured to charge the rechargeable DC power source using regenerative braking of the brushless motor. The charge control circuit may include a switch and a diode connected in series between the brushless motor and a positive terminal of the rechargeable DC power source. The device may be a power tool. The device may be an appliance. The rechargeable DC power source may include a rechargeable battery. The rechargeable DC power source may include a first rechargeable DC power source and a second rechargeable DC power source.

In another general aspect, an electrical device includes a brushless motor having at least one coil, a first input configured to be coupled to a rechargeable direct current (DC) power source, a second input configured to be coupled to an alternating current (AC) power source and a switch module that is operably connected to the brushless motor, to the first input and to the second input. The switch module may be configured to receive power from at least one of the AC power source and the rechargeable DC power source to operate the brushless motor. The device includes a motor control circuit that is operably coupled to the brushless motor and to the switch module, where the motor control circuit is configured to control operation of the brushless motor. The device includes a charge control switch module connected in series between the brushless motor and the rechargeable DC power source. The charge control switch is configured to enable charging the rechargeable DC power source when the brushless motor is not being powered using at least one coil of the brushless motor in a buck converter arrangement, and is configured to enable charging of the rechargeable DC power source using power from the brushless motor during regenerative braking of the brushless motor.

Implementations may include one or more of the following features. For example, the charge control circuit may include a single switch and a diode connected in series between a coil of the brushless motor and a positive terminal of the rechargeable DC power source. The rechargeable DC power source may include a rechargeable battery.

US2012/0019174 discloses a drive system and a method for operating that drive system, the drive system including an electric motor, inverter and an energy store. The drive system comprises a motor having at least one coil; a first input configured to be coupled to a rechargeable direct current power source; a second input configured to be coupled to an alternating current power source; a motor control module that is operably connected to the motor, to the first input and to the second input, the motor control module configured to deliver power from at least one of the rechargeable DC power source and the AC power source to the motor; and a charge control circuit that is operably connected to the universal motor and to the second input, wherein the charge control circuit is configured to enable charging the rechargeable DC power source using energy from the AC power source and the at least one coil of the motor in a buck converter configuration, the charge control circuit being configured to enable charging of the rechargeable DC power source when the motor is operating using energy from the AC power source.

According to an aspect of the present invention, there is provided an electrical device, comprising a universal motor having at least one coil; a first input configured to be coupled to a rechargeable direct current (DC) power source; a second input configured to be coupled to an alternating current (AC) power source; a motor control module that is operably connected to the universal motor, to the first input and to the second input, the motor control module configured to deliver power from at least one of the rechargeable DC power source and the AC power source to the universal motor; and a charge control circuit that is operably connected to the universal motor and to the second input, wherein the charge control circuit is configured to enable charging the rechargeable DC power source using energy from the AC power source and the at least one coil of the universal motor in a buck converter configuration.

The charge control circuit may be configured to enable charging of the rechargeable DC power source when the universal motor is operating using energy from the AC power source. The charge control circuit may be further configured to enable charging of the rechargeable DC power source during coasting cycles of the universal motor while the universal motor is operating using energy from the AC power source. Alternatively or in addition the at least one coil may comprise a motor field coil and an armature coil, and the charge control circuit is configured to use energy from the motor field coil and the armature coil in the buck converter configuration. The charge control circuit may further comprise a first switch connected in series between a negative terminal of the rechargeable DC power source and a terminal of the at least one coil and a second switch and a diode connected in series between a positive terminal of the rechargeable DC power source and the terminal of the at least one coil and in parallel to the first switch. The charge control circuit may close the first switch and opens the second switch so that energy from the AC power source is delivered to the at least one coil while the universal motor is running and opens the first switch and closes the second switch so that current from the at least one coil is delivered to the rechargeable DC power source for charging while the universal motor is coasting.

The charge control circuit can be configured to enable charging of the rechargeable DC power source only when the universal motor is not operating. The at least one coil may comprise a motor field coil, and the charge control circuit is configured to use energy from the motor field coil in the buck converter configuration. Alternatively and in addition, the charge control circuit comprises a first switch connected in series between a negative terminal of the rechargeable DC power source and a first terminal of at least one coil, a second switch connected in series between a positive terminal of the rechargeable DC power source and the first terminal of the at least one coil and in parallel to the first switch, and a recirculating diode connected in series between the negative terminal of the rechargeable DC power source and a second terminal of the at least one coil. During operation of the motor, the first switch can be closed and the second switch opened so that energy from the AC power source is delivered to the at least one coil, and during charging of the rechargeable DC power source, the first switch is opened and the second switch is closed so that current from the at least one coil is delivered to the rechargeable DC power source for charging. The charge control circuit may further comprise a third switch connected in series between the AC power source and the second terminal of the rechargeable DC power source. The third switch may also be configured to enable and disable running the universal motor using the AC power source, and cycling between opened and closed states to enable charging of the rechargeable DC power source using the at least one coil in the buck converter configuration. The charge control circuit may comprise a switch and a diode connected between the at least one coil and the at least one rechargeable DC power source.

The device may be a power tool. Alternatively, the device may be an appliance.

The rechargeable DC power source may comprise a rechargeable battery.

The rechargeable DC power source may comprise a first rechargeable DC power source and a second rechargeable DC power source.

According to another alternative example, not covered by the scope of the present invention, there is provided an electrical device, comprising a brushless motor having at least one coil, a first input configured to be coupled to a rechargeable direct current (DC) power source, a second input configured to be coupled to an alternating current (AC) power source, a switch module that is operably connected to the brushless motor, to the first input and to the second input, wherein the switch module may be configured to receive power from at least one of the AC power source and the rechargeable DC power source so that both the AC power source and the DC power source are able to operate the brushless motor; a motor control circuit that is operably coupled to the brushless motor and to the switch module, wherein the motor control circuit is configured to control operation of the brushless motor; and a charge control circuit that is operably connected to the brushless motor and to the first input, wherein the charge control circuit is configured to enable charging of the rechargeable DC power source using power from the AC power source, the at least one coil of the brushless motor and the motor control circuit.

The charge control circuit may be configured to enable the charging of the rechargeable DC power source in a buck converter arrangement.

The charge control circuit and the motor control circuit may be configured to charge the rechargeable DC power source when the brushless motor is not operating.

The charge control circuit and the motor control circuit may be configured to charge the rechargeable DC power source using regenerative braking of the brushless motor.

The charge control circuit comprises a switch and a diode connected in series between the brushless motor and a positive terminal of the rechargeable DC power source.

The device may be a power tool.

The device is an appliance.

The rechargeable DC power source may comprise a rechargeable battery.

The rechargeable DC power source may comprise a first rechargeable DC power source and a second rechargeable DC power source.

According to another alternative example, not covered by the scope of the present invention, there is provided an electrical device, comprising a brushless motor having at least one coil; a first input configured to be coupled to a rechargeable direct current (DC) power source; a second input configured to be coupled to an alternating current (AC) power source; a switch module that is operably connected to the brushless motor, to the first input and to the second input, wherein the switch module may be configured to receive power from at least one of the AC power source and the rechargeable DC power source to operate the brushless motor; a motor control circuit that is operably coupled to the brushless motor and to the switch module, wherein the motor control circuit is configured to control operation of the brushless motor; and a charge control switch module connected in series between the brushless motor and the rechargeable DC power source, the charge control switch is configured to enable charging the rechargeable DC power source when the brushless motor is not being powered using at least one coil of the brushless motor in a buck converter arrangement, and is configured to enable charging of the rechargeable DC power source using power from the brushless motor during regenerative braking of the brushless motor.

The charge control circuit may comprise a single switch and a diode connected in series between a coil of the brushless motor and a positive terminal of the rechargeable DC power source.

The rechargeable DC power source comprises a rechargeable battery.

The details of one or more implementations are set forth in the accompanying drawings and the description below. Other features will be apparent from the description and drawings, and from the claims.
FIG. 1A is a schematic diagram of a first example electrical circuit for a device having a universal motor, a rechargeable battery, and an alternating (AC) power source illustrating the universal motor powered by the AC power source.
FIG. 1B is a schematic diagram of the example electrical circuit of FIG. 1A illustrating charging the rechargeable battery.
FIG. 1C is a schematic diagram of the example electrical circuit of FIG. 1A illustrating the universal motor running on power from the rechargeable battery.
FIG. 2A is a schematic diagram of a second example electrical circuit for a device having a universal motor, a rechargeable battery, and an AC power source illustrating the universal motor powered by the AC power source.
FIG. 2B is a schematic diagram of the example electrical circuit of FIG. 2A illustrating charging the rechargeable battery during a switch on-cycle of switch S3.
FIG. 2C is a schematic diagram of the example electrical circuit of FIG. 2A illustrating charging the rechargeable battery during the switch off-cycle of switch S3.
FIG. 2D is a schematic diagram of the example of the electrical circuit of FIG. 2A illustrating the universal motor running on power from the rechargeable battery.
FIG. 3 is a block diagram of a third example electrical device having a brushless motor, a rechargeable battery and an AC power source.
FIGS. 4A-4C are schematic diagrams of the example electrical device of FIG. 3 with the brushless motor running on power from the AC power source.
FIGS. 5A-5C are schematic diagrams of the example electrical device of FIG. 3 with the brushless motor running on power from the rechargeable battery.
FIGS. 6A and 6B are schematic diagrams of the example electrical device of FIG. 3 using power from the AC power source during motor non-operation to charge the rechargeable battery.
FIG. 7 is a schematic diagram of the example electrical device of FIG. 3 having two rechargeable batteries.
FIGS. 8A and 8B are schematic diagrams of the example electrical device of FIG. 3 using power generated from regenerative braking of the brushless motor for charging the rechargeable battery.
FIGS. 9A-9D are schematic diagrams of an example electrical device using power from either an AC power source or a DC power source.

This document describes a device and techniques for on-board charging and regenerative braking charging of a rechargeable direct current (DC) power source (e.g., a rechargeable battery). The device may include different types of electrical devices that include a motor, a first input coupleable to a rechargeable battery and a second input coupleable to an alternating current (AC) power source. The device may be an alternating current/direct current (AC/DC) electrical device that can run the motor off of the AC power source (e.g., AC mains) or the rechargeable DC battery, for example as disclosed in U.S. Provisional Application Nos. 61/994,953 and 62/000,112. The device also can charge the rechargeable battery when the first input is coupled to the AC power source using at least one motor coil as an inductor in combination with a charge control circuit in a buck converter configuration. The device also may charge the battery using power generated from regenerative braking of the motor when stopping the motor using at least one motor coil and the charge control circuit configured to alternatively store and release energy from the motor coil.

In one example implementation, the device includes a power tool. The power tool may include, for instance, a miter saw, a table saw, a tile saw, a chop saw, a hammer drill, a grinder, a drill, an impact wrench, a sander or other type of power tool. In other example implementations, the device may include other electrical equipment including an appliance, such as a refrigerator having a rechargeable battery backup, a compressor, or other electrical equipment including both a motor and a rechargeable battery. The AC power source may be an AC mains (e.g., 120V AC power or 240V AC power) or another source of AC power such as that generated by a gas-powered generator. The rechargeable battery may include a nickel-cadmium battery, a nickel-metal-hydride battery, or a lithium ion battery, and may have any number of nominal, average, operating, or rated voltages. Examples of such batteries are shown, for example, in U.S. Provisional Application Nos. 61/994,953 and 62/000,112.

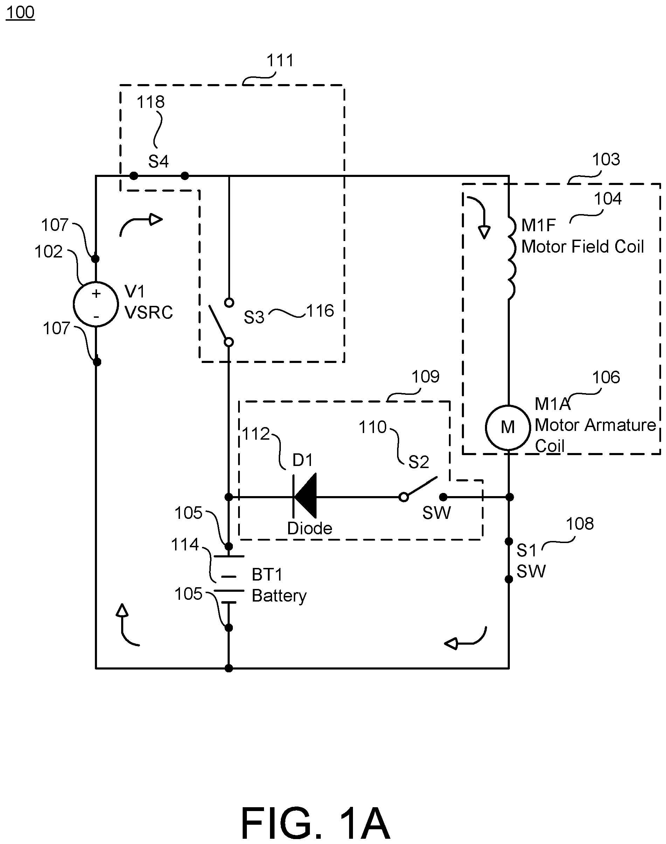

FIG. 1A-1C are schematic diagrams of an example electrical circuit 100 for a device having a universal motor 103 (or another type of brushed motor), a first input 105 coupleable to a rechargeable DC power source 114 (e.g., a rechargeable battery pack or another type of battery 114), a second input 107 coupleable to an AC power source 102, a switching circuit 111 configured to provide power to the motor 103 from one of the battery 114 and the AC power source 102, and a charge control circuit 109. The switching circuit 111 includes a first switch 118 that selectively connects the AC power source 102 to the motor 103, and a second switch 116 that selectively connects the battery 114 to the motor 103. The switches 116, 118 can be opened or closed selectively to allow the motor 103 to be powered by one of the AC power source 102 and the battery 114. The switches 116, 118 may be single pole-single throw switches, semiconductor switches such as transistors, or any other type of switch. The switching circuit 111 may instead have a single switch that switches between connecting the AC power source 102 and the battery 114.

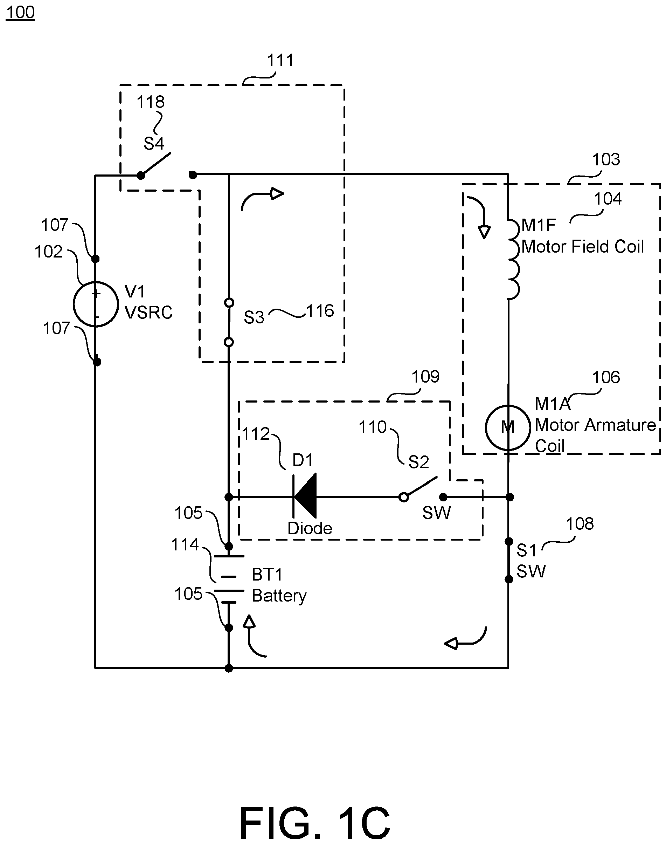

FIG. 1A illustrates the electrical circuit 100 when the switching circuit 111 is configured so that the motor 103 is running using power from the AC power source 102. FIG. 1C illustrates the electrical circuit 100 when the switching circuit 111 is configured so that the motor 103 is running using power from the battery 114.

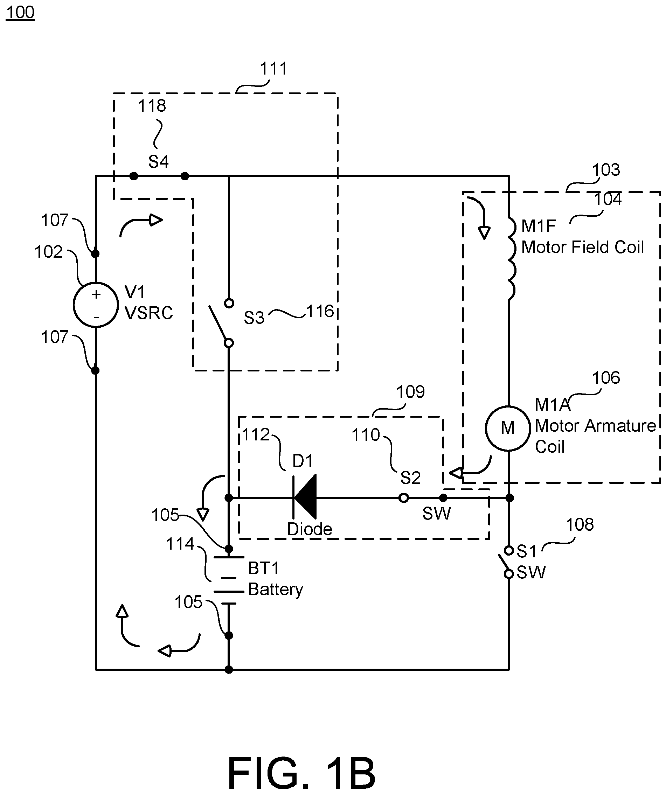

FIG. 1B illustrates the electrical circuit 100 with the switching circuit 111 and the charge control circuit 109 configured to enable the battery 114 to be charged while the motor 103 is running using power from the AC power source 102. In this example, at least one coil from the motor 103 may be used as an inductor to limit current charging the rechargeable battery 114 in combination with the charge control circuit 109 in a buck converter configuration. In addition to the charge control circuit 109, motor commutation will assist in limiting current flow during charging of the battery 114.

The motor 103 includes a motor field or stator coil 104 and a motor armature coil 106. The motor field 104 and the motor armature 106 may be components of a universal motor that is used to run the electrical device. The motor 103 may be a series wound motor. The motor field coil 104 may be the stationary component of the universal motor 103 and the motor armature 106 may be the rotating component of the universal motor 103. The universal motor 103 is considered to be a brush commutated motor. The AC power source 102 provides power to the motor field coil 104 and the motor armature coil 106.

The electrical circuit 100 also includes a motor control switch S1 108, which when closed as in FIGS. 1A and 1C allows the current to flow from the AC power source 102 or the battery 114, respectively, through the motor components 104 and 106 to operate the device. The motor control switch 108 may be a semiconductor switch (e.g., a transistor, a FET, a MOSFET, a triac, etc.), which allows current to flow only when the switch is closed. In other embodiments, the motor control switch 108 may be a single pole single throw switch. In other embodiments, the motor control switch S1 108 may be replaced or supplemented with a motor control circuit such as an H-bridge driver circuit or a half-bridge driver circuit. In still further embodiments, the switch S1 may be coupled to an external user input such as a variable speed trigger switch to enable variable speed operation of the motor 103.

The charge control circuit 109 includes a switch S2 110 and a diode D1 112 connected in series between the output terminal of the motor armature coil 106 and the positive terminal of the battery 114. As shown in FIGS. 1A and 1C, when switch 110 is open, current does not flow through switch 110 and thus does not flow through diode 112 and does not recharge the battery 114. Instead, with switch 108 closed and switch 110 open, the power source 102 or the battery 114 supplies power to the motor to run the device as indicated by the arrows in Figs. 1A and 1C.

Referring to FIG. 1B, the charge control circuit 109 and the motor control switch 108 work together to enable charging of the battery 114 while the motor 103 is running. When the motor control switch 108 is closed, power is delivered from at least one of the AC power source 102 and the battery 114 to drive the motor 103. To keep the motor from an overspeed condition, the switch 108 can periodically open to allow the motor 103 to coast for brief periods of time. When switch 108 is open, allowing the motor 103 to coast, and switches 110 and 118 also are closed, current from the AC power source 102 is diverted to flow through the motor coils 104, 106, the switch 110 and the diode 112 to charge the battery 114. In this manner, the motor field coil 104 and the armature coil 106 together act as an inductor and provide a power source for charging the battery 114 when switch 108 is open and switch 110 is closed. In this manner, the battery 114 is being charged when the motor 103 is coasting.

Additionally, switch 110 can operate at a variable pulse width to vary the amount of current flowing into the battery 114. When the motor 103 needs additional energy to rotate, switch 108 will close and switch 110 will open. This method of charging the battery 114 may be referred to as on-board charging. In the examples of FIG. 1A , FIG. 1B and FIG. 1C, the charging of the battery 114 may be practical only while the motor 103 is operating and powered by the AC power source 102 because the charging current may cause the motor 103 to operate when operation is not desired.

For the operation of the device, the device may operate when connected to the AC power source 102 or the device may operate using the battery 114 to run the universal motor 103 when the device is disconnected from the AC power source 102. The switching circuit 111 includes switch S3 116 and switch S4 118 to enable the device to operate using either the AC power source 102 or the battery 114. As shown in FIG. 1A, when running the motor 103 from the AC power source 102 or charging the battery 114 when running the motor from AC power source 102, switch 118 is closed and switch 116 is open. As shown in FIG. 1C, when running the motor 103 using the battery 114, the switch 116 is closed and the switch 118 is open. In this manner, the device may operate the universal motor 103 using either AC power from the power source 102 or DC power from the battery 114. The switches 108, 110, 116, 118 may be manually actuatable by a user or may be controlled automatically by a controller or microprocessor (not shown).

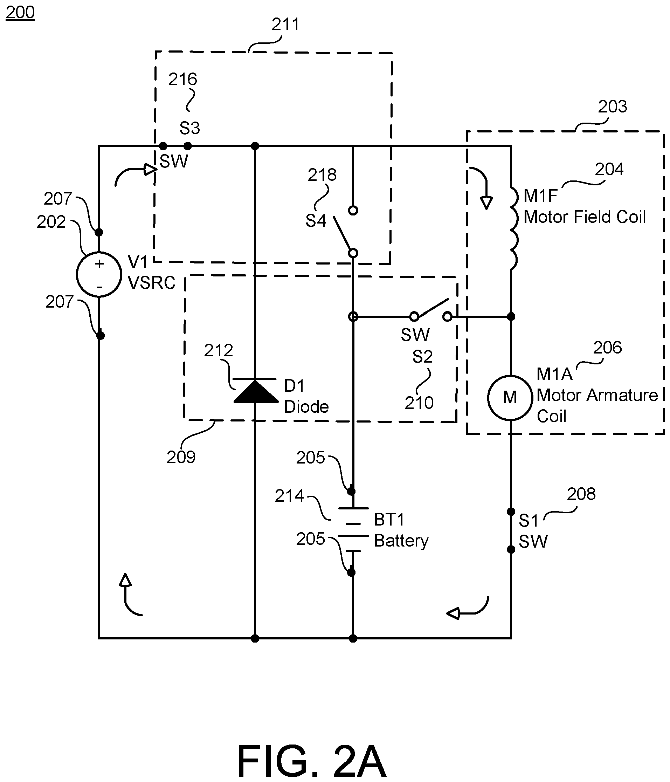

FIGS. 2A-2D are schematic diagrams of an example electrical circuit 200 for a device having a universal motor 203 (or another type of brushed motor), a first input 205 coupleable to a rechargeable DC power source 214 (e.g., a rechargeable battery 214), a second input 207 coupleable to an AC power source 202 (e.g., AC mains or an AC generator), a switching circuit 211 configured to provide power to the motor 203 from one of the battery 214 and the AC power source 202, and a charge control circuit 209. The switching circuit 211 includes a first switch 216 that selectively connects the AC power source 202 to the motor 203, and a second switch 218 that selectively connects the battery 214 to the motor 203. The switches 216, 218 can be opened or closed selectively to allow the motor 203 to be powered by one of the AC power source 202 and the battery 214. The switches 216, 218 may be single pole-single throw switches, semiconductor switches such as transistors, or any other type of switch. The switching circuit 211 may instead have a single switch that switches between connecting the AC power source 202 and the battery 214.

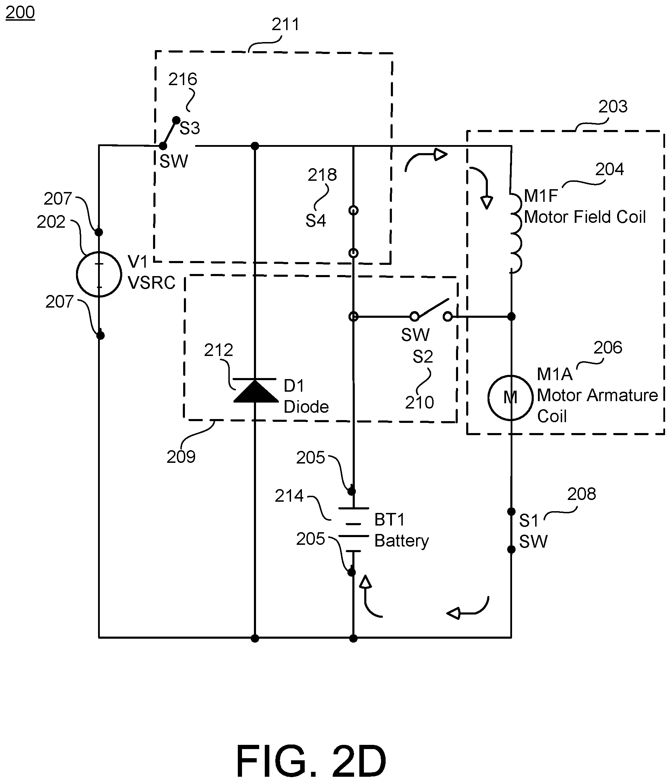

FIG. 2A illustrates the electrical circuit 200 when the switching circuit 211 is configured so that the motor 203 is running using power from the AC power source 202. FIG. 2D illustrates the electrical circuit 200 when the switching circuit 211 is configured so that the motor 203 is running using power from the battery 214.

FIG. 2D illustrates the electrical circuit 200 when the switching circuit 211 is configured so that the motor 203 is running using power from the battery 214. In this example, switch S3 216 is open and switch S4 218 is closed to enable power from the battery 214 to run the motor 203, as shown by the current arrows in the figure.

The electrical circuit 200 motor 103 includes a motor field or stator coil 204 and a motor armature coil 206. The motor field 204 and the motor armature 206 may be components of a universal motor that is used to run the electrical device. The motor 203 may be a series wound motor. The motor field coil 204 may be the stationary component of the universal motor 203 and the motor armature 206 may be the rotating component of the universal motor 203. The universal motor 203 is considered a brush commutated motor. The AC power source 202 provides power to the motor field coil 204 and the motor armature coil 206.

The electrical circuit 200 also includes a motor control switch S1 208 and a switch S3 216, which when both switches are closed and switches 210 and 218 are open, as in FIG. 2A, allows the current to flow from the AC power source 202 through the motor components 204 and 206 to operate the device. The motor control switch 208 may be a semiconductor switch (e.g., a transistor, a FET, a MOSFET, a triac, etc.) and the switch 216 may be a semiconductor switch, which allows current to flow only when the switch is closed. In other embodiments, these switches may be single pole, single throw switches. In other embodiments, the motor control switch S1 208 may be replaced or supplemented with a motor control circuit such as an H-bridge driver circuit or a half-bridge driver circuit. In still further embodiments, the switch S1 208 may be coupled to an external user input such as a variable speed trigger switch to enable variable speed operation of the motor 203.

The charge control circuit 209 includes a switch S2 210 and a diode D1 212. The switch 210 is connected in series between an output terminal of the motor field coil204 and the positive terminal of the battery 214. The battery 214 is coupled to the diode 212 in parallel. As shown in FIG. 2A, when switch 210 is open, current does not flow through switch 210 and thus does not flow to recharge the battery 214. Instead, when switch 208 is closed and switch 210 open, the AC power source 202 supplies power to the motor 203 to run the device as indicated by the arrows in the circuit diagram. The battery 214 is isolated from charging by switch 210 being opened.

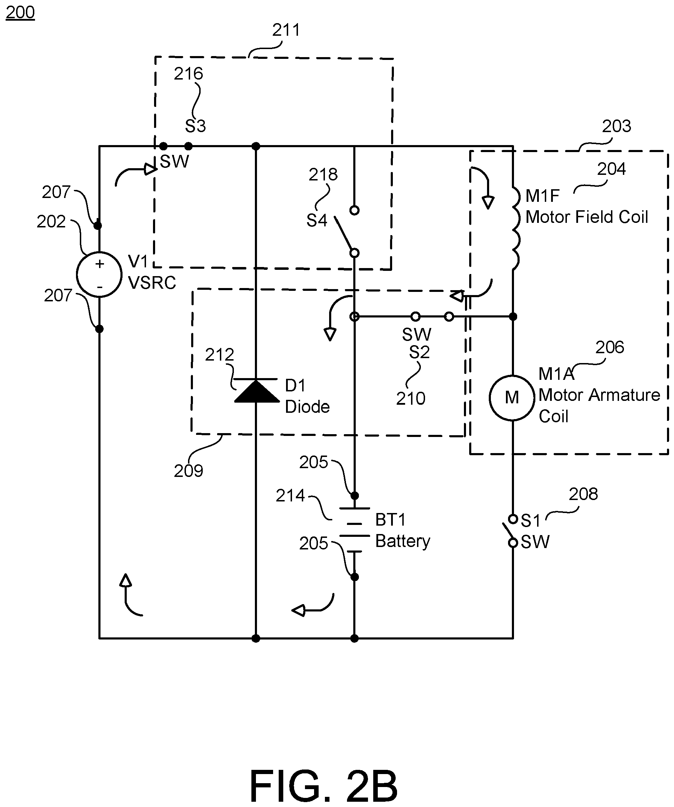

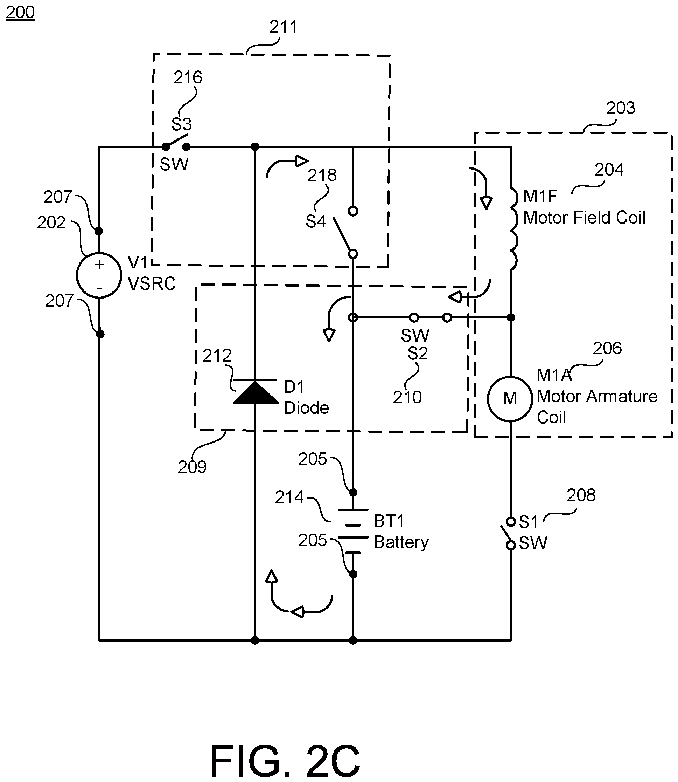

FIGS. 2B and 2C illustrate operation of the charging control circuit 209 to charge the battery 214 in a buck converter configuration, while the motor 203 is not running. In FIG. 2B, when switch 208 is open and switches 210 and 216 are closed, current is diverted to flow from the motor field coil 204 through switch 210 to charge the battery 214. The motor is not running because no current is flowing to the motor armature coil 206. In this manner, the motor field coil 204 acts as an inductor and provides a power source for charging the battery 214 when switch 208 is open and switches 210 and 216 are closed. The current is routed through the motor field coil 204 and not the armature coil 206 to allow current to flow to the battery 214 without causing the motor to rotate. The arrows in the circuit in FIG. 2B show the flow of the current.

Switch 216 can operate at a variable pulse width to vary the amount of current flowing into the battery 214 and to the motor windings in the motor field coil 204. When switch 216 is closed, as in FIG. 2B, the current flows from the motor field coil 204, which functions as an inductor, through switch 210 to charge the battery 214 and then through the AC power source 202. The battery 214 is being charged on-cycle.

When switch 216 is open, as in FIG. 2C, the current flows from the motor field coil 204, which functions as an inductor, through switch 210 to charge the battery 214 and then through the recirculating diode 212. The battery 214 is being charged off-cycle. This method of charging the battery may be referred to as on-board charging. In the examples of FIGS. 2B-2C, the charging of the battery 214 only occurs while the motor 203 is not operating and powered by the AC power source 202 because the switch 210 placement in the circuit prevents the motor 203 from operating when the battery 214 is being charged.

For the operation of the device, the device may operate when connected to the AC power source 202 or the device may operate using the battery 214 to run the universal motor 203 when the device is disconnected from the AC power source 202. The switching circuit 211 includes switch S4 218, which operates in tandem with switch S3 216 to enable the device to operate using either the AC power source 202 or the battery 214. As shown in FIG. 2A, when running the motor 203 from the AC power source 202, switch 216 is closed and switch 218 is open. As shown in FIG. 2D, when running the motor 203 using the battery 214, the switch 218 is closed and the switch 216 is open. In this manner, the device may operate the universal motor 203 using either AC power from the AC power source 202 or DC power from the battery 214. The switches 208, 210, 216, 218 may be manually actuatable by a user or may be controlled automatically by a controller or microprocessor (not shown).

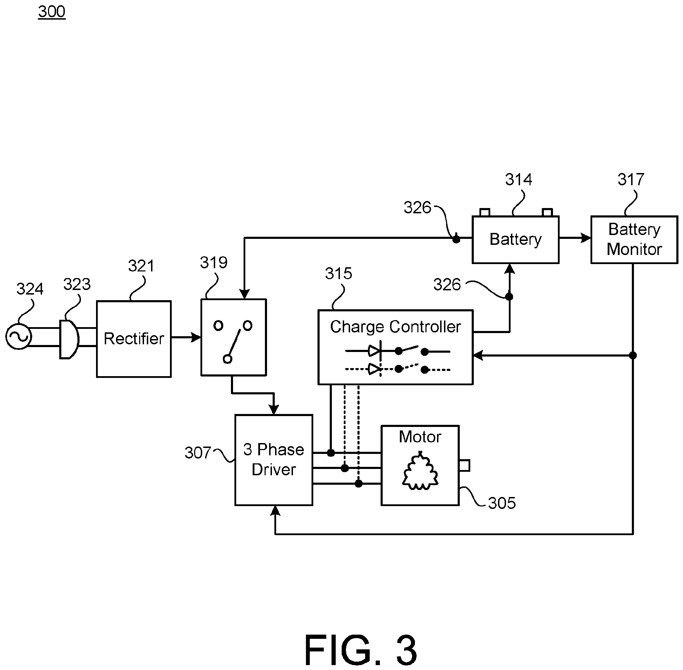

FIG. 3 is a block diagram of an example, outside of the scope of the claimed invention, of an electrical device 300 having a brushless motor 305, a brushless motor control circuit 307, a first input 323 for an AC power source 324, a second input 326 for a rechargeable battery 314. The electrical device 300 further includes a charge control circuit 315 to enable using one or more coils of the brushless motor 305 and one or more switches of the brushless motor control circuit 307 to charge the battery 314 while the motor 305 is not being powered, by using one or more of the motor coils as inductors in a buck converter configuration.

The electrical device 300 further includes a battery monitoring module 317 configured to sense a state of charge of the battery 314, a switch module 319 configured to control delivery of power to the motor 305 from at least one of the AC power source 324 and the battery 314 and a rectifier circuit 321 (such as a full-wave bridge rectifier with a smoothing capacitor) to convert the AC current from the AC power source 324 to a DC current to power the brushless motor 305 or to charge the battery 314. The electrical device 300 and the brushless motor 305 can be operated using either the AC power source 324 (through the rectifier circuit 321) or the battery 314 depending on the configuration of the switch module 319. The switch module 319 may be used to switch the operation of the brushless motor 305 between being operated using the AC power source 324 (through the rectifier circuit 321) and being operated using the battery 314. The rectifier circuit 321 is operably coupled to the switch module 319. This allows AC current from the AC source 324 to flow to the rectifier circuit where the AC current is converted to DC current. The DC current is provided to the switch module 319 and then to the brushless motor control circuit 307 to power the motor 305.

The battery 314 is also operably coupled to the switch module 319. The switch module 319 may be configured to enable a path for DC current to flow from the battery 314 through the switch module 319 and then to the brushless motor control circuit 307 to power the motor 305.

The electrical device 300 may include any of the devices described above. The brushless motor 305 may be a permanent magnet brushless motor having a rotating armature with a permanent magnet in the armature and three stationary motor coils (arranged in, e.g., a delta or wye configuration). The motor coils are switched on and off sequentially, as controlled by the brushless motor control circuit 307, which may comprise a 3-phase driver circuit. This creates an electromagnetic force to cause the armature to rotate. During motor operation, pairs of switches in the brushless motor control circuit 307 are turned on in sequence to commutate the motor and thus spin the rotor. When the motor is stopped, these switches in the brushless motor control circuit 307 are turned off and thus, the motor no longer commutates. Further details regarding normal operation of a brushless motor can be found, for example, in commonly owned U.S. Patent Application No. 14/057,003, filed October 18, 2013.

The charge control circuit 315 may be operably connected to the brushless motor control circuit 307, the motor 305 and the battery 314. The charge control circuit 315 may include one or more components to facilitate charging the battery 314 when the motor 305 is not in motion. The charge control circuit 315 may enable the current to flow through the windings of the motor 305 and into the battery 314. The charge control circuit 315 may function in a manner similar to a buck converter to enable the charging of the battery 314.

The battery monitoring module 317 may be configured to monitor the charging needs of the battery 314. The battery monitoring module 317 may be operably coupled to the battery 314, to the charge control circuit 315 and to the brushless motor control circuit 307. When the battery monitoring module 317 determines the battery 314 needs to be charged, the battery monitoring module 317 may send a control signal to the charge control circuit 315 and the brushless motor control circuit 307 to start the battery charging. When the battery monitoring module 317 determines the battery 314 no longer needs to be charged, the battery monitoring module 317 may send a control signal to the charge control circuit 315 and the brushless motor control circuit 307 to terminate the battery charging. The battery monitoring module 317 may be configured to perform these functions during periods when the motor 305 is operating, either during an application, during coasting or during commutation from one phase to the next phase, and during periods when the motor 305 is not operating.

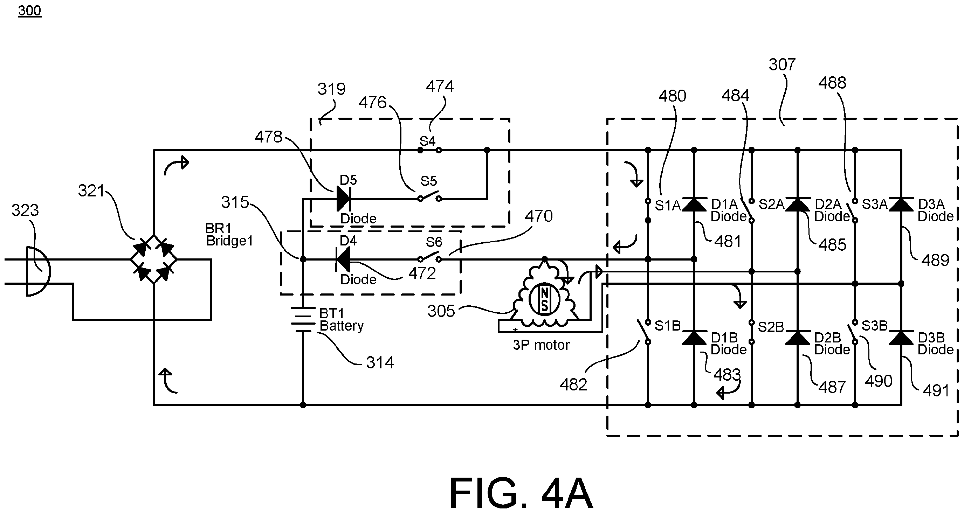

FIGS. 4A-4C are schematic diagrams of the example electrical device 300 of FIG. 3 receiving powerfrom an AC power source through the 3-phases of the brushless motor. The flow of current in each of the figures is marked by the arrows in the figures. In these examples, the charge control circuit 315 includes a switch S6 470 and a diode D4 472. The switch module 319 includes a switch S4 474, a switch S5 476 and a diode D5 478.

In FIG. 4A, the switches in the brushless motor control circuit 307, the charge control circuit 315 and the switch module 319 are configured to allow AC power source to operate phase 1 of the motor. Switch S4 474 is closed to allow current to flow from the AC power source input 323 through the rectifier circuit 321 and to the brushless motor control circuit 307. Switch S5 476 is open so that the battery 314 does not provide power to the brushless motor control circuit 307 and operate the motor 305. Switch S6 470 is also open so the battery 314 is not being charged during this example operation.

With the AC power source running the motor 305, in the first phase, switch S1A 480 is closed and switch S1B 482 is open. Switch S2A 484 is open and switch S2B 486 is closed. Both switches S3A 488 and S3B 490 are open. In this example, the brushless motor control circuit 307 also includes a diode D1A 481, a diode D1B 483, a diode D2A 485, a diode D2B 487, a diode D3A 489, and a diode D3B 491.

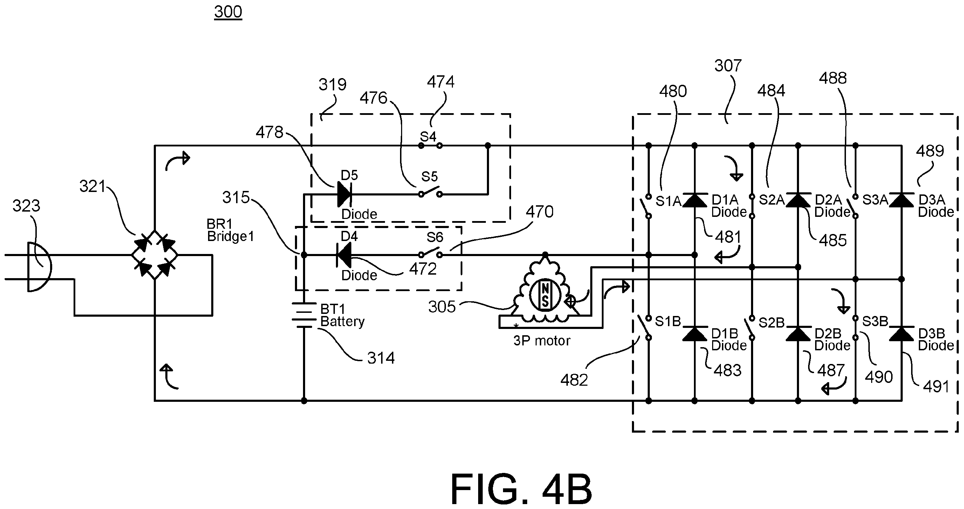

In FIG. 4B, the switches in the brushless motor control circuit 307, the charge control circuit 315 and the switch module 319 are configured to allow the AC power source to operate phase 2 of the motor. With the AC power source running the motor 305, in the second phase, switch S1A480 is open and switch S1B 482 is open. Switch S2A 484 is closed and switch S2B 486 is open. Switch S3A 488 is open and switch S3B 490 is closed.

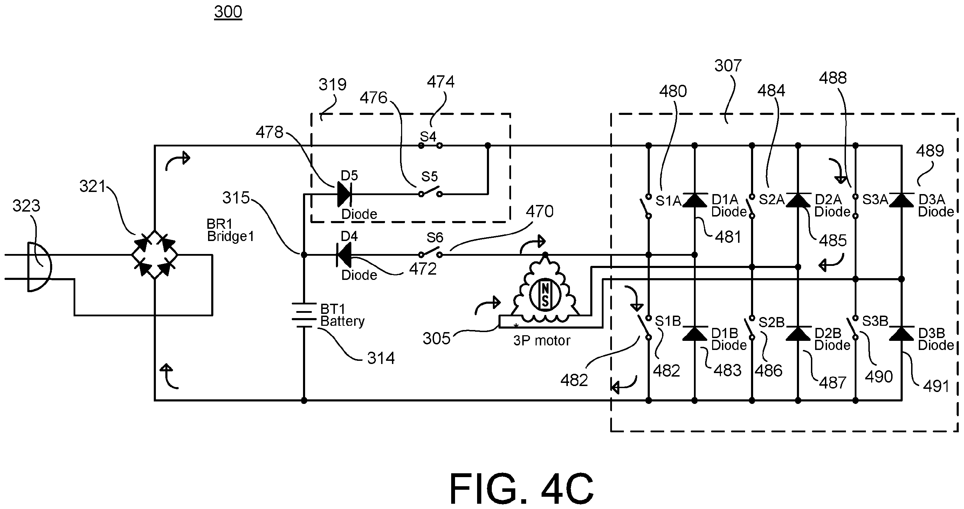

In FIG. 4C, the switches in the brushless motor control circuit 307, the charge control circuit 315 and the switch module 319 are configured to allow the AC power source to operate phase 3 of the motor. With the AC power source running the motor 305, in the third phase, switch S1A 480 is open and switch S1B 482 is closed. Switch S2A 484 is open and switch S2B 486 is open. Switch S3A 488 is closed and switch S3B 490 is open. The opening and closing of the switches in the brushless motor control circuit 307, as shown in the 3-phase operation illustrated in FIGS. 4A-4C, causes the armature of the motor to rotate and to run the electrical device 300. The aforementioned description provides a basic scheme to commutate a brushless motor. Improvements to this scheme can include adding switch overlap, pulse width modulation and advancing and retarding of the electrical versus mechanical phase relation.

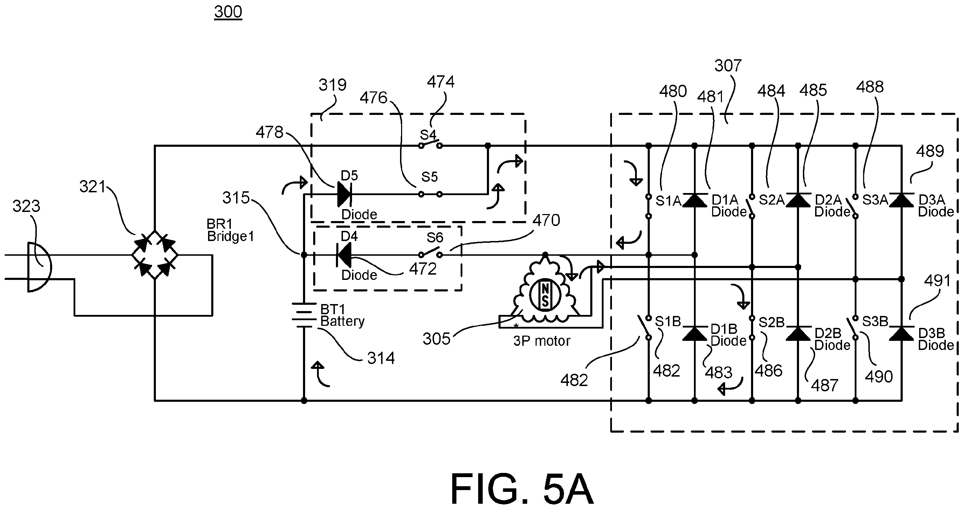

FIGS. 5A-5C are schematic diagrams of the example electrical device 300 of FIG. 3 running on battery power through the 3-phases of the brushless motor. The flow of current in each of the figures is marked by the arrows in the figures.

In FIG. 5A, the switches in the brushless motor control circuit 307, the charge control circuit 315 and the switch module 319 are configured to allow the battery to operate phase 1 of the motor 305. Switch S4 474 is open to prevent current from flowing from the AC power source input 323 through the rectifier circuit 321 and to the brushless motor control circuit 307. Instead, switch S5 476 is closed so that the battery 314 provides power to the brushless motor control circuit 307 and operate the motor 305. Switch S6 470 is also open so the battery 314 is not being charged during this example operation.

With the battery 314 running the motor 305, in the first phase, switch S1A 480 is closed and switch S1 B 482 is open. Switch S2A 484 is open and switch S2B 486 is closed. Both switches S3A 488 and S3B 490 are open.

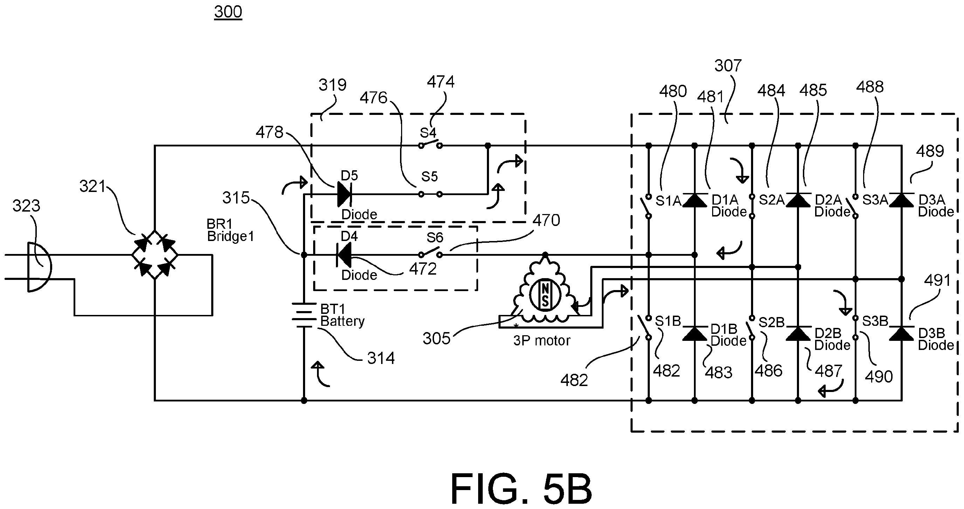

In FIG. 5B, the switches in the brushless motor control circuit 307, the charge control circuit 315 and the switch module 319 are configured to allow the battery 314 to operate phase 2 of the motor. With the battery 314 running the motor 305, in the second phase, switch S1A 480 is open and switch S1B 482 is open. Switch S2A 484 is closed and switch S2B 486 is open. Switch S3A 488 is open and switch S3B 490 is closed.

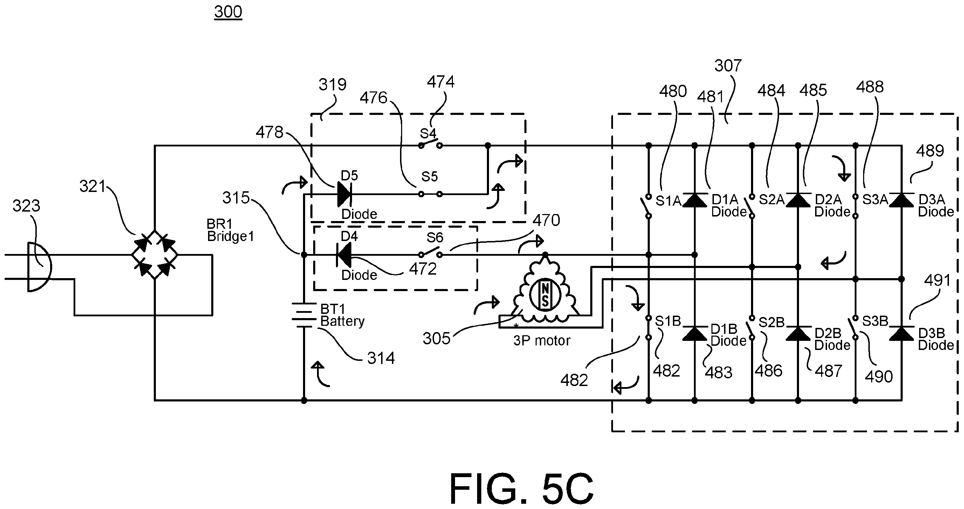

In FIG. 5C, the switches in the brushless motor control circuit 307, the charge control circuit 315 and the switch module 319 are configured to allow the battery 314 to operate phase 3 of the motor. With the battery 314 running the motor 305, in the third phase, switch S1A 480 is open and switch S1B 482 is closed. Switch S2A 484 is open and switch S2B 486 is open. Switch S3A 488 is closed and switch S3B 490 is open. The opening and closing of the switches in the brushless motor control circuit 307, as shown in the 3-phase operation illustrated in FIGS. 5A-5C, causes the armature of the motor to rotate and to run the electrical device 300. The aforementioned description provides a basic scheme to commutate a brushless motor. Improvements to this scheme can include adding switch overlap, pulse width modulation and advancing and retarding of the electrical versus mechanical phase relation.

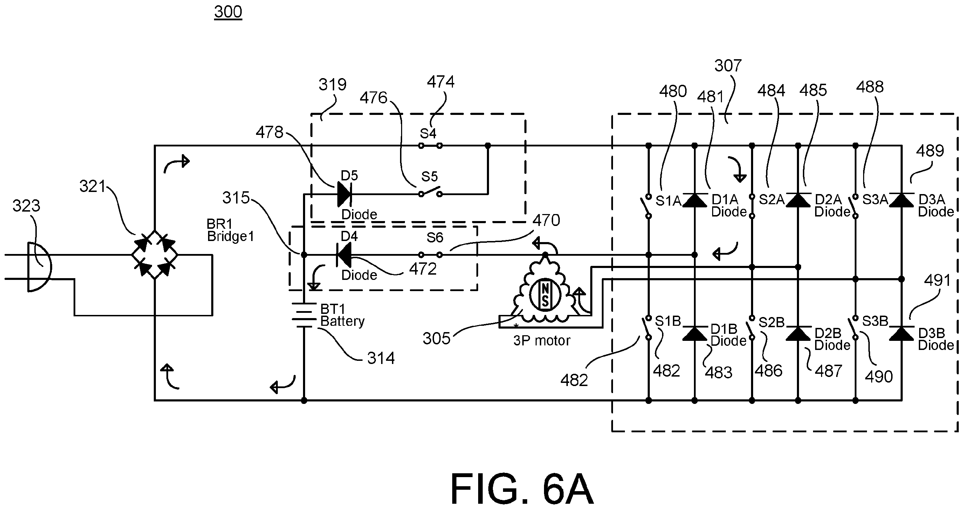

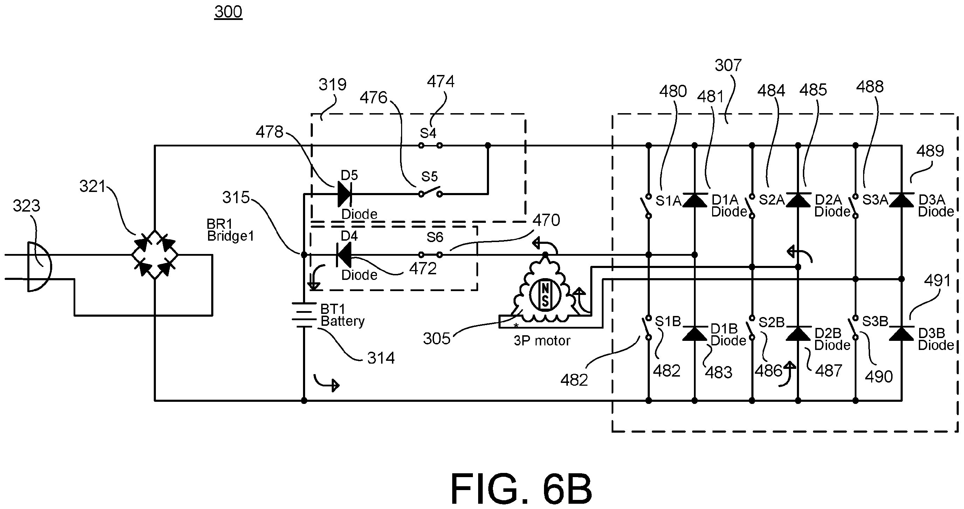

FIGS. 6A and 6B are schematic diagrams of the example electrical device 300 of FIG. 3 to charge the battery 314 from the AC power source input 323 through the rectifier circuit 321 when the motor is not running. The flow of current in each of the figures is marked by the arrows in the figures. In these examples, the charge control circuit 315, including the switch S6 470 and the diode D4 472, are configured to control the charging of the battery 314.

In FIG. 6A, the switches in the brushless motor control circuit 307, the charge control circuit 315 and the switch module 319 are configured to allow the AC power source input 323 to charge the battery 314 using the coils of the motor 305 as an inductor in a buck converter arrangement. Switch S4 474 is closed to allow current to flow from the AC power source input 323 through the rectifier circuit 321, to get rectified to direct current (DC) and through switch S2A484, the coil in phase 1 of the motor 305 and the charge control circuit 315 to charge the battery 314. Switch S6 470, in the charge control circuit 315, is closed to allow the current to flow from the motor 305, acting as an inductor, to the battery 314.

In this figure, the configuration of the components functions as a buck converter on-cycle to charge the battery 314 using the phase 1 coil of the motor 305 as an inductor. When switch S2A 484 is closed, a magnetic field is being built up on the phase 1 coil of the motor 305 during the on-cycle. The on-cycle refers to the period of time in which current from the AC power source flows through the phase 1 coil of the motor 305 as an inductor to the battery 314. When the current hits a pre-determined level, switch S2A484 opens as shown in FIG. 6B, and the diode D4 472 forward biases to release the stored energy from the phase 1 coil of the motor 305 into the battery 314 during the off-cycle. The off-cycle refers to the period of time in which current flows only between the coil of the motor 305 as an inductor and the battery 314. The switching open and closing of the switch S2A 484 allows the charge to build up in the phase 1 coil of the motor 305 during the on-cycle and then release the charge to the battery 314 during the off-cycle. In this manner, a current mode control scheme is used to determine when to open and close the switch S2A 484. In other implementations, other schemes may be used to determine when to open and close the switch S2A 484.

In one implementation, synchronous buck conversion may be used to charge the battery 314 by also opening and closing the switch S2B 486. In this implementation, switch S2B 486 will be closed when switch S2A 484 is open and current is flowing through the inductor and the battery 314. Switch S2A484 and switch S2B 486 are not closed at the same time and switch S2B 486 opens when the phase 1 coil of the motor 305 reaches zero current.

FIGS. 6A and 6B illustrate using the first phase of the motor 305 to charge the battery 314. In other implementations, the second and/or third phase of the motor 305 may be used additionally or alternatively to charge the battery 314. In such an implementation, the charge control circuit 315 may include additional switches and diodes connected to the other motor phases and the corresponding brushless motor control circuit 307 switches and diodes to use the other motor phases to charge the battery 314.

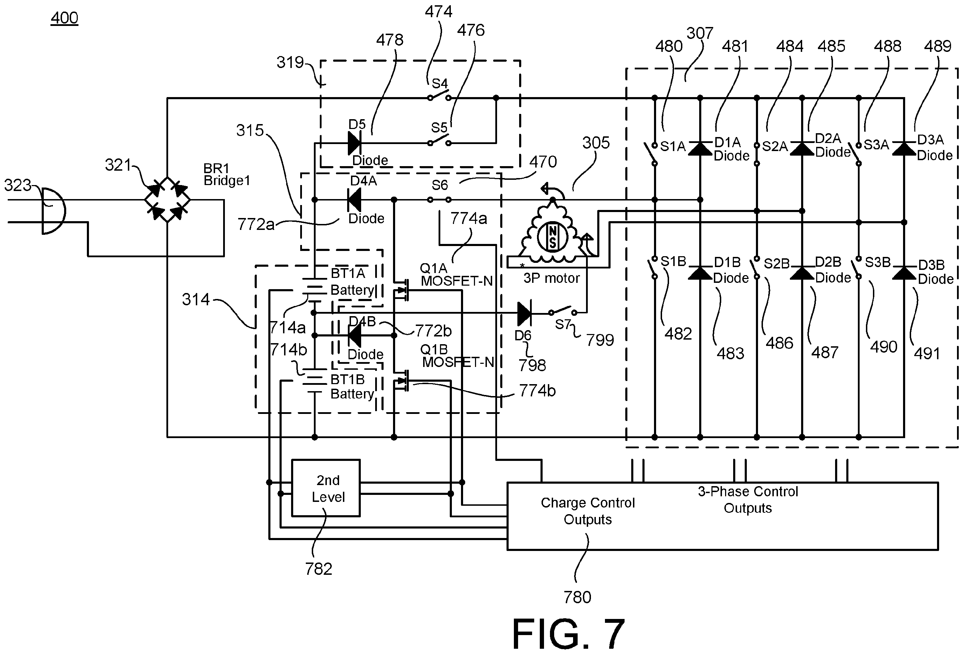

FIG. 7 is a schematic diagram of the example electrical device 400, which is similar to the electrical device 300 of FIG. 3, but the battery 314 includes two rechargeable batteries 714a and 714b in series. Similarly to FIGS. 6A and 6B, the batteries 714a and 714b may be re-charged from the AC power source input 323 through the rectifier circuit 321 when the motor is not running. The charge control circuit 315 includes the switch S6 470 and two diodes 772a and 772b instead of the one diode used when the device includes a single battery. Diode D6 798 and switch S7 799 may be configured to bypass battery 714b to allow full independent and simultaneous charging of both batteries. This bypass switch S7 799 is closed when battery 714a BT1A is not desired to be charged. To charge only battery 714a BT1A then during the on-cycle transistors 774a and 774b will be closed bypassing all current and charging the inductor only. During the off-cycle current flows from the inductor through S6 470, D4A 772a, the S7 799, diode D6 798 and the inductor.

The charge control circuit 315 also may include transistors Q1A 774a and Q1 B 774b. The transistors Q1A 774a and Q1 B 774b may shunt current around the battery that is not being charged. Primary charge termination may be handled by a control circuit 780 by controlling the shunting transistors Q1A 774a and Q1B 774b and controlling the switching action of the switch S6 470. Secondary termination acts directly on Q1A 774a and Q1B 774b to shunt current around the batteries 714a and 714b. In addition, the 2^{nd} level control circuit 782 may disable the power source to the controller 780 to stop switching. That is, in the event that control circuit 780 supplies a charge current in error, control circuit 782 shunts the current around the rechargeable batteries 714a and 714b by closing transistors Q1A 774a and Q1B 774b.

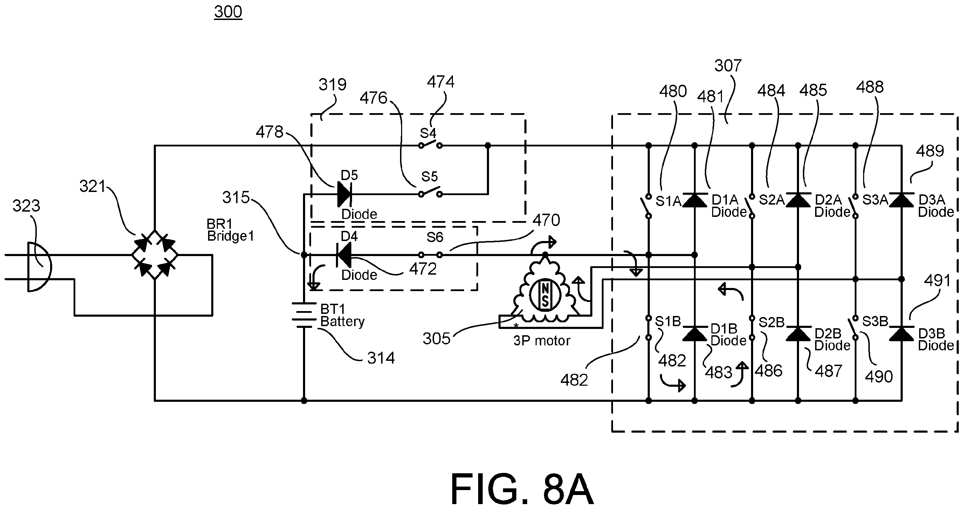

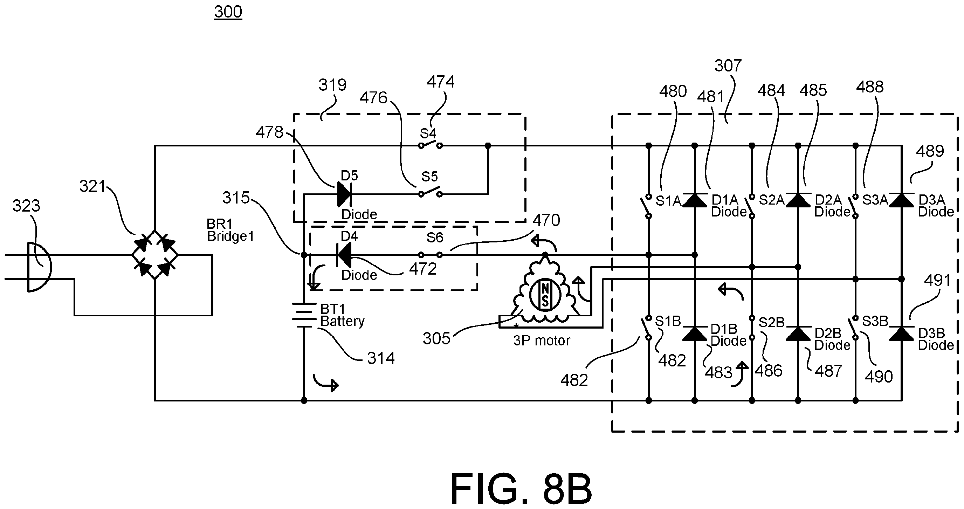

FIGS. 8A and 8B are schematic diagrams of the example electrical device 300 of FIG. 3 using regenerative braking for charging the battery. The arrows in the figures illustrate the flow of current. Regenerative braking includes charging the battery 314 by converting mechanical inertia into electrical energy. The same circuit as illustrated in FIGS. 3, 4A-4C, 5A-5C and 6A-6B may be used for charging the battery using regenerative braking.

In general, regenerative braking is used to stop a motor. A short is created in the motor coils, which allows current to build up in the motor coils and brings the motor armature to a stop.

To accomplish charging of the battery 314 using regenerative braking, two switches in the brushless motor control circuit 307 are turned on simultaneously to create a short in the motor stator. The pairing of switches is chosen based on rotor position with respect to the needed polarity. This short circuit causes a current to build up in the motor windings. By turning off one (opening) of the two switches in the brushless motor control circuit 307 and turning on (closing) a switch in the charge control circuit 315, the energy (current) flowing in the motor winding is directed into the battery 314. This process is repeated until the motor 305 has stopped. The charge control circuit 315 in combination with the motor coils functions as a generator to charge the battery 314.

For example, in FIG. 8A, to stop the motor, switches S1B 482 and S2B 486 are closed. The closing of switches S1B 482 and S2B 486 creates a short in the motor stator. The short circuit caused by the closing of S1B 482 and S2B 486 causes a current to build up in the motor windings. In FIG. 8B, switch S1B 482 is opened and with the switch S6 470 being closed, the current flows from the motor windings to the battery 314 to charge the battery 314. The switch S1B is repeatedly cycled (i.e., opened and closed) to brake the motor armature and to charge the battery 314.

As shown, switches S4 474 and S5 476 are both open so that no current is flowing from either the AC power source input 323 or the battery 314 to run the motor. Thus, the regenerative braking and charging of the battery 314 occurs without the AC power source input 323 or the battery 314 operating the motor 305.

In other implementations, the charge control circuit 315 may include additional switches to connect to the other phases of the motor switches in the brushless motor control circuit 307.

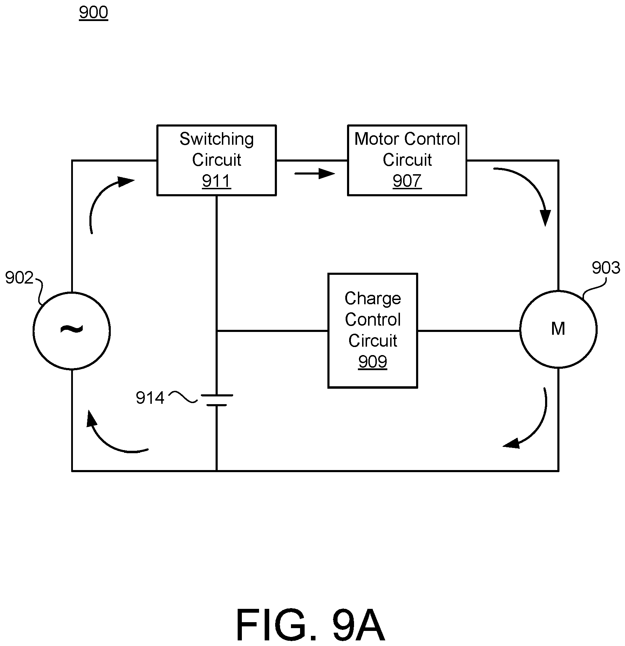

FIGS. 9A-9D illustrate an electrical device that can be powered by an AC power source or a DC power source. In FIGS. 9A-9C, the electrical device 900 includes an AC power source 902, a motor 903, a charge control circuit 909, a motor control circuit 907, a switching circuit 911 and a rechargeable DC power source (e.g., a rechargeable battery) 914. The switching circuit 911 is configured to control the switching of the power source for the motor 903 between the AC power source 902 and the DC power source 914. The motor control circuit 907 is configured to control the operation of the motor 903. The charge control circuit 909 is configured to operate in conjunction with the switching circuit 911 to control the charging of the DC power source 914 using the AC power source 902.

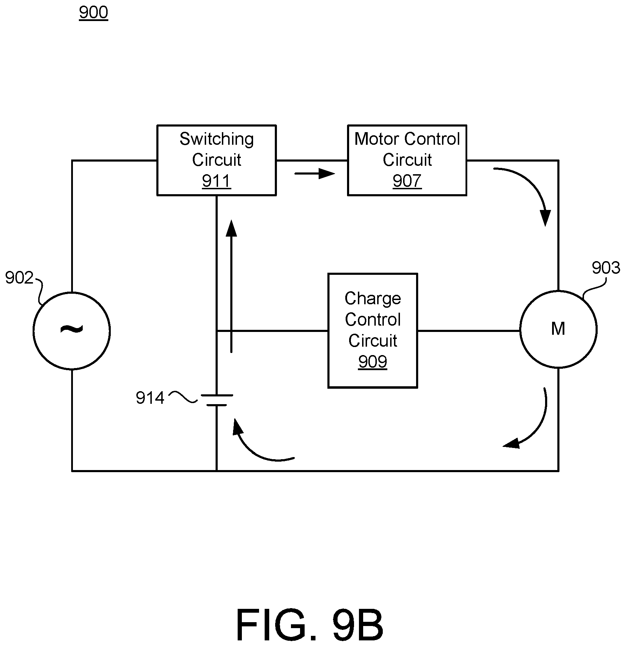

FIG. 9A illustrates the operation of the motor 903 using the AC power source 902 as indicated by the current arrows in the figure. FIG. 9B illustrates the operation of the motor 903 using the DC power source 914 as indicated by the current arrows in the figure.

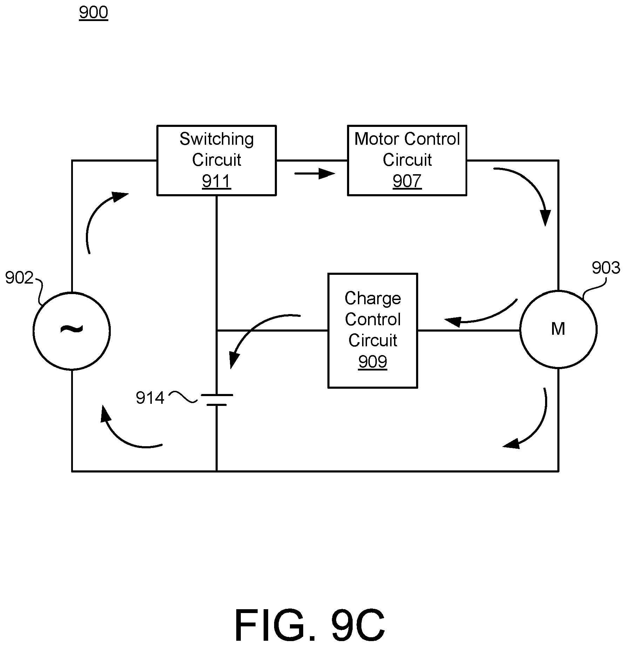

FIG. 9C illustrates charging the DC power source 914 using the AC power source 902 and at least one coil from the motor 903. As discussed in detail above, the charging may occur when the motor 903 is operating, when the motor 903 is not operating and during regenerative braking of the motor 903.

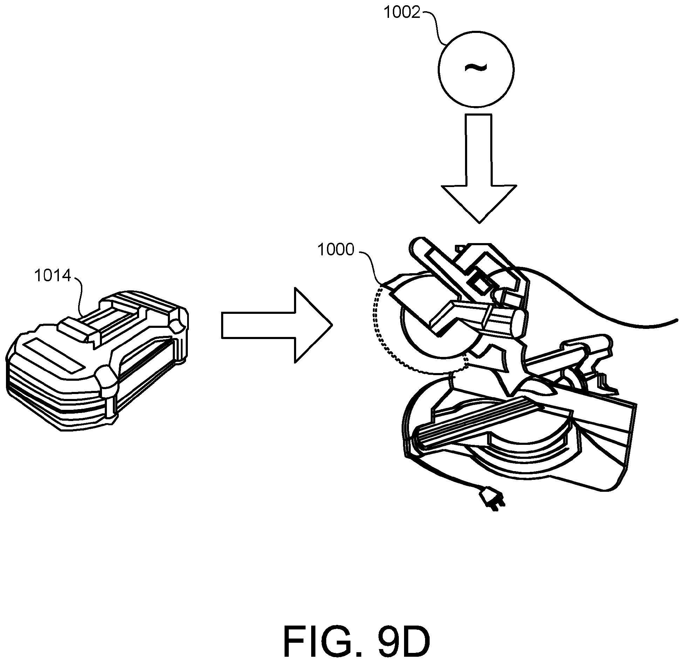

FIG. 9D illustrates a power tool 1000 as an example of the electrical device 900 of FIGS. 9A-9C. The power tool 1000 can be powered using either the AC power source 1002 or the DC power source 1014, which in this example is a rechargeable battery.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

The switches used in the above-described circuits may be any type of mechanical, electromechanical, electrical, or semiconductor switches. For example, the above-described switched may be implemented using one or more of single-throw, single-pole switches, single-pole double-throw switches, double pole double throw switches, relay switches, transistors, FETs, MOSFETs, triac switches, IGBTs, or other well-known switches in the art. The operation of the switches may be controlled manually by a user or automatically via a control circuit, controller, microcontroller, or microprocessor that has been programmed to control the switches as described above. The charging control circuit and/or the arrangement or configuration of the switches may be altered to also charge the battery in a boost configuration or a buck-boost configuration.

## Claims

1. An electrical device, comprising:
a universal motor (103) having at least one coil (104, 106);
a first input (105) configured to be coupled to a rechargeable direct current (DC) power source (114);
a second input (107) configured to be coupled to an alternating current (AC) power source (102);
a motor control module (111) that is operably connected to the universal motor (103), to the first input (105) and to the second input (107), the motor control module (111) configured to deliver power from at least one of the rechargeable DC power source (114) and the AC power source (102) to the universal motor (103); and
a charge control circuit (109) that is operably connected to the universal motor (103) and to the second input (107), wherein the charge control circuit (109) is configured to enable charging the rechargeable DC power source (114) using energy from the AC power source (102) and the at least one coil (104, 106) of the universal motor (103) in a buck converter configuration,
the charge control circuit (109) being configured to enable charging of the rechargeable DC power source (114) when the universal motor (103) is operating using energy from the AC power source (102);
wherein the charge control circuit (109) comprises a first switch (108) connected in series between a negative terminal (105) of the rechargeable DC power source (114) and a terminal of the at least one coil (104, 106) and a second switch (110) and a diode (112) connected in series between a positive terminal (105) of the rechargeable DC power source (114) and the terminal of the at least one coil (103, 106) and in parallel to the first switch (108).

2. The device of claim 1, wherein the charge control circuit is configured to enable charging of the rechargeable DC power source during coasting cycles of the universal motor while the universal motor is operating using energy from the AC power source.

3. The device of claim 1, wherein the at least one coil comprises a motor field coil and an armature coil, and the charge control circuit is configured to use energy from the motor field coil and the armature coil in the buck converter configuration.

4. The device of claim 1, wherein the charge control circuit closes the first switch and opens the second switch so that energy from the AC power source is delivered to the at least one coil while the universal motor is running and opens the first switch and closes the second switch so that current from the at least one coil is delivered to the rechargeable DC power source for charging while the universal motor is coasting.

## Patentansprüche

1. Elektrogerät, das Folgendes umfasst:
einen Universalmotor (103), der mindestens eine Spule (104, 106) aufweist;
einen ersten Eingang (105), der konfiguriert ist, um mit einer aufladbaren Gleichstrom-(DC)-Leistungsquelle (114) gekoppelt zu sein;
einen zweiten Eingang (107), der konfiguriert ist, um mit einer Wechselstrom-(AC)-Leistungsquelle (102) gekoppelt zu sein;
ein Motorsteuermodul (111), das betrieblich mit dem Universalmotor (103), mit dem ersten Eingang (105) und dem zweiten Eingang (107) verbunden ist, wobei das Motorsteuermodul (111) konfiguriert ist, um Leistung von mindestens einer der aufladbaren Gleichstrom-Leistungsquelle (114) und der Wechselstrom-Leistungsquelle (102) zu dem Universalmotor (103) zu liefern; und
eine Ladesteuerschaltung (109), die betrieblich mit dem Universalmotor (103) und dem zweiten Eingang (107) verbunden ist, wobei die Ladesteuerschaltung (109) konfiguriert ist, um das Laden der aufladbaren Gleichstrom-Leistungsquelle (114) unter Verwenden von Energie von der Wechselstrom-Leistungsquelle (102) und der mindestens einen Spule (104, 106) des Universalmotors (103) in einer Abwärtsreglerkonfiguration zu ermöglichen, wobei die Ladesteuerschaltung (109) konfiguriert ist, um das Laden der aufladbaren Gleichstrom-Leistungsquelle (114) zu ermöglichen, wenn der Universalmotor (103) unter Verwenden von Energie von der Wechselstrom-Leistungsquelle (102) arbeitet,
wobei die Ladesteuerschaltung (109) einen ersten Schalter (108) umfasst, der zwischen einer negativen Klemme (105) der aufladbaren Gleichstrom-Leistungsquelle (114) und einer Klemme der mindestens einen Spule (104, 106) verbunden ist, und einen zweiten Schalter (110) und eine Diode (112), die in Reihe zwischen einer positiven Klemme (105) der aufladbaren Gleichstrom-Leistungsquelle (114) und der Klemme der mindestens einen Spule (103, 106) und parallel mit dem ersten Schalter (108) verbunden ist.

2. Gerät nach Anspruch 1, wobei die Ladesteuerschaltung konfiguriert ist, um das Laden der aufladbaren Gleichstrom-Leistungsquelle während Auslaufzyklen des Universalmotors zu ermöglichen, während der Universalmotor unter Verwenden von Energie von der Wechselstrom-Leistungsquelle funktioniert.

3. Gerät nach Anspruch 1, wobei die mindestens eine Spule eine Motorfeldspule und eine Ankerspule umfasst, und die Ladesteuerschaltung konfiguriert ist, um Energie von der Motorfeldspule und der Ankerspule in der Abwärtsreglerkonfiguration zu verwenden.

4. Gerät nach Anspruch 1, wobei die Ladesteuerschaltung den ersten Schalter schließt und den zweiten Schalter öffnet, so dass Energie von der Wechselstrom-Leistungsquelle zu der mindestens einen Spule geliefert wird, während der Universalmotor läuft, und den ersten Schalter öffnet und den zweiten Schalter schließt, so dass Strom von der mindestens einen Spule zu der aufladbaren Gleichstrom-Leistungsquelle zum Laden geliefert wird, während der Universalmotor ausläuft.

## Revendications

1. Dispositif électrique, comprenant :
un moteur universel (103) ayant au moins une bobine (104, 106) ;
une première entrée (105) configurée pour être couplée à une source d'alimentation en courant continu (CC) rechargeable (114) ;
une seconde entrée (107) configurée pour être couplée à une source d'alimentation en courant alternatif (CA) (102) ;
un module de commande de moteur (111) qui est connecté fonctionnellement au moteur universel (103), à la première entrée (105) et à la seconde entrée (107), le module de commande de moteur (111) étant configuré pour alimenter le moteur universel (103) à partir d'au moins l'une de la source d'alimentation CC rechargeable (114) et de la source d'alimentation CA (102) ; et
un circuit de commande de charge (109) qui est connecté fonctionnellement au moteur universel (103) et à la seconde entrée (107), le circuit de commande de charge (109) étant configuré pour permettre la charge de la source d'alimentation CC rechargeable (114) à l'aide de l'énergie provenant de la source d'alimentation CA (102) et de l'au moins une bobine (104, 106) du moteur universel (103) dans une configuration de convertisseur abaisseur de tension, le circuit de commande de charge (109) étant configuré pour permettre la charge de la source d'alimentation CC rechargeable (114) lorsque le moteur universel (103) fonctionne à l'aide de l'énergie provenant de la source d'alimentation CA (102) ;
dans lequel le circuit de commande de charge (109) comprend un premier commutateur (108) connecté en série entre une borne négative (105) de la source d'alimentation CC rechargeable (114) et une borne de l'au moins une bobine (104, 106) et un second commutateur (110) et une diode (112) connectés en série entre une borne positive (105) de la source d'alimentation CC rechargeable (114) et la borne de l'au moins une bobine (103, 106) et en parallèle au premier commutateur (108).

2. Dispositif selon la revendication 1, dans lequel le circuit de commande de charge est configuré pour permettre la charge de la source d'alimentation CC rechargeable pendant des cycles de roue libre du moteur universel pendant que le moteur universel fonctionne à l'aide de l'énergie provenant de la source d'alimentation CA.

3. Dispositif selon la revendication 1, dans lequel l'au moins une bobine comprend une bobine de champ de moteur et une bobine d'induit, et le circuit de commande de charge est configuré pour utiliser l'énergie provenant de la bobine de champ de moteur et la bobine d'induit dans la configuration de convertisseur abaisseur de tension.

4. Dispositif selon la revendication 1, dans lequel le circuit de commande de charge ferme le premier commutateur et ouvre le second commutateur de sorte que l'énergie provenant de la source d'alimentation CA alimente l'au moins une bobine pendant que le moteur universel tourne et ouvre le premier commutateur et ferme le second commutateur de sorte que le courant provenant de l'au moins une bobine alimente la source d'alimentation CC rechargeable pour la charger pendant que le moteur universel est en roue libre.
